Europäisches Patentamt

European Patent Office

Office européen des brevets

(11) Publication number: **0 074 325**
**A1**

(12) # EUROPEAN PATENT APPLICATION

(21) Application number: **82630081.6**

(22) Date of filing: **20.08.82**

(51) Int. Cl.³: **C 08 J 5/24**
**C 08 L 75/04**

(30) Priority: **04.09.81 US 299355**

(43) Date of publication of application:
**16.03.83 Bulletin 83/11**

(84) Designated Contracting States:
**DE FR GB IT**

(71) Applicant: **THE GOODYEAR TIRE & RUBBER COMPANY**
**1144 East Market Street**
**Akron, Ohio 44316(US)**

(72) Inventor: **Thompson, Donald Raymond**
**204 Deepwood**
**Wadsworth Ohio 44281(US)**

(72) Inventor: **White, John Richard**
**355 Hillsdale Circle**
**Wadsworth Ohio 44281(US)**

(74) Representative: **Weyland, Joseph Jean Pierre**
**Goodyear International Tire Technical Center Patent**
**Department Avenue Gordon Smith**
**L-7750 Colmar-Berg(LU)**

(54) **A method of forming a long fiber reinforced plastic.**

(57) A relatively long fiber reinforced polyurethane article formed by forming relatively long fibers into a composite, binding said fibers to each other to set or fix the composite, filling said composite with a urethane precursor and reacting to form a long fiber reinforced polyurethane article.

EP 0 074 325 A1

826 0074325

# A METHOD OF FORMING A LONG FIBER REINFORCED PLASTIC

## Technical Field

This invention relates to a method of forming a long fiber reinforced molded plastic article and to said article. More particularly this invention relates to a method of molding plastic articles reinforced with relatively long glass fibers using the RIM technique of loading the mold.

## Background

The RIM technique, viz, reactive injecting molding, is widely used in making plastic articles such as parts of fenders, hoods and rear deck lids used in the automobile industry, as well as parts for other industries. Plastics have certain limitations in properties that limit the penetration of plastics into the automobile fields and related fields. Consequently the art has resorted to the use of reinforcing materials to improve or change the plastic properties in their deficient areas. When this was tried with fiber reinforcing in RIM technique the fiber lengths were limited essentially to 0.08 to 0.3 centimeter milled fiberglass, the resulting molded article exhibiting improvements in flexural modulus, heat sag and coefficient of linear thermal expansion (CLTE) but the article develops reduced impact and brittleness.

## Disclosure and Practice of the Invention

The fibers are cut to the desired length, usually greater than one centimeter, and in some cases 15 centimeters or more, with the preferred length being 7.6 to about 12 centimeters. The chopped fibers are arranged preferably in a random or a jackstraw pattern on the support or a carrier and light bonded with a suitable bonding agent. Preferably the chopped glass is essentially in the shape of the finished article at the time the bonding occurs although the bonding agent can be sprayed, preferably on chopped fibers as they fall on the support and then cut or trimmed and shaped prior to the setting of the bonding agent to give a chopped preform. The chopped fabric preform is placed on or in a mold and the mold is closed prior to injecting in the plastic material or its precursor into the mold cavity. Then the plastic material or its precursor is cured to give the finished shaped chopped fiber reinforced article.

Generally the finished shaped chopped fiber reinforced molded article can have from about 5 to about 50 percent by volume of chopped fibers with the preferred range being about 7 to 20 percent by volume.

The chopped fibers can be any of the well known fibers but the preferred fibers are the polyesters, polyamide and glass. Glass is particularly desired for polyurethane molded articles as glass materially affects the strength properties to permit its use in structural or semi-structural pursuits.

The binders useful in this invention can be any of those known for binding fibers such as the well known epoxy resin curative blends where the curative can be an acid, amine or amide, the polyesters, phenol-formaldehyde resins and the polyurethanes to mention only a few. Usually the amount of binder used should be sufficient to retain the chopped fiber in the molded shape of the preform, while the preform is moved to the shaper and receives a charge of the molding material. Thus generally 10 to 20 percent of binder by weight will be used.

In the following example which is illustrative of the present invention all parts and percentages are by weight unless otherwise specifically noted.

## EXAMPLE

Fiberglass rovings from a spool were chopped into lengths approximately 10 centimeters long and allowed to drop in random fashion on a plate before being oversprayed with epoxy resin-methylene diamine to coat the chopped fibers with about 5 percent binder. Then the binder base coated chopped glass fibers were compressed and cured with heat to give a preform. The preform was placed in a mold and the mold cavity was injection filled with RIM polyurethane reaction mixture to give a molded polyurethane reinforced with chopped fiberglass.

A polyurethane reinforced with 10 centimeters of chopped fiberglass at 20 to 40 percent loadings had a flexural modulus of 400,000 p.s.i. and other improvement in physical properties relative to like polyurethane moldings reinforced at the same loading levels with milled glass of about 0.08 centimeter. The improvement in some properties was in excess of 100 percent.

In a special embodiment it was found to be advantageous to apply a facing veil of a suitable fabric to give the surface area of the molding better appearance and properties. Similar results were obtained when polyurethane and polyester were used instead of epoxy resin diamine curative as a binder. Also chopped wire can be used instead of chopped fiberglass.

While certain representative embodiments and details have been shown for the purpose of illustrating the invention it will be apparent to those skilled in this art that various changes and modifications may be made therein without departing from the spirit or scope of the invention.

Claims

1.    A method of forming a relatively long fiber reinforced polyurethane article comprising the steps of forming an arrangement of relatively long fibers, fixing said fibers in said arrangement with a binder to give a fixed arrangement, placing said fixed arrangement in a mold, filling the fixed arrangement with a urethane precursor and reacting to form a long fiber reinforced polyurethane article.

2.    The method of Claim 1 wherein the fibers have a length of 1 to 15 centimeters.

3.    The method of Claim 1 wherein the binder is selected from the class consisting of polyester, polyurethane and epoxy resin.

4.    The method of Claim 1 wherein a facing veil rests between the mold and at least one surface of said arrangement when the arrangement is filled with a urethane precursor and reacted.

5.    The method of Claim 1 wherein the fibers comprise from 5 to about 50 percent by volume of the molded article.

# European Patent Office

## EUROPEAN SEARCH REPORT

| | DOCUMENTS CONSIDERED TO BE RELEVANT | | EP 82630081.6 |

| Category | Citation of document with indication, where appropriate, of relevant passages | Relevant to claim | CLASSIFICATION OF THE APPLICATION (Int Cl ³) |
|---|---|---|---|
| Y | US - A - 3 573 130 (VINTON et al.)<br><br>* Column 2, line 50 - column 3, line 16; column 4, lines 1-10 *<br>-- | 1-3,5 | C 08 J 5/24<br>C 08 L 75/04 |
| Y | US - A - 4 251 428 (RECKER et al.) (17-02-1981)<br><br>* Claims *<br>---- | 1-3,5 | |

TECHNICAL FIELDS SEARCHED (Int Cl ³)

C 08 J

C 08 L 75/00

The present search report has been drawn up for all claims

| Place of search | Date of completion of the search | Examiner |
|---|---|---|
| VIENNA | 25-11-1982 | WEIGERSTORFER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document